# EUROPÄISCHE PATENTSCHRIFT

(11) **EP 1 086 795 B1**
(45) Veröffentlichungstag und Bekanntmachung des Hinweises auf die Patenterteilung: **26.02.2003**
(21) Anmeldenummer: 00810755.9
(22) Anmeldetag: 24.08.2000
(51) Int. Cl.: B29B 15/12, B29C 70/00

(54) **Verbundwerkstoff mit in einer Thermoplastmatrix eingebetteten Fasern**
Composite material provided with embedded fibers within a thermoplastic matrix
Matériau composite avec des fibres incluses dans une matrice thermoplastique

(30) Priorität: 23.09.1999 EP 99810854
(43) Veröffentlichungstag der Anmeldung: 28.03.2001
(73) Patentinhaber: Arova Schaffhausen AG, 8200 Schaffhausen (CH); SIKA AG, 8048 Zürich (CH)
(72) Erfinder: Vodermayer, Albert Maria, 8305 Dietlikon (CH)
(74) Vertreter: Sulzer Management AG

(56) Entgegenhaltungen:
- EP-A- 0 313 923
- EP-A- 0 579 047
- DE-A- 4 121 915
- GB-A- 2 202 182
- US-A- 5 275 883

## Beschreibung

Die Erfindung betrifft einen Verbundwerkstoff mit in einer Thermoplastmatrix eingebetteten Fasern gemäss Oberbegriff von Anspruch 1, ein Verfahren zu dessen Herstellung und Anwendungen des Verbundwerkstoffs.

Die DE-A- 41 21 915 beschreibt eine Druckimprägnierung, nämlich ein Verfahren zum Imprägnieren eines endlosen Verstärkungsfaserstrangs mit einem thermoplastischen Polymer. Bei diesem Verfahren wird der Faserstrang zuerst in einem Bad, das eine Dispersion von festen Thermoplastpartikeln enthält, mit den Partikeln imprägniert. Nach dem Imprägnierbad wird das Dispergiermittel in einem Trocknungsofen aus dem imprägnierten Faserstrang verdampft. Anschliessend wird der trockene Faserstrang durch einen Schmelzofen geführt, in dem die Partikel schmelzen. Nach einer Konsolidierung liegt ein bändchenförmiger Faserverbundstoff mit einer festen Thermoplast- oder Polymermatrix vor. Aus einem Bündel solcher Bändchen lassen sich mittels einer Pultrusion Profile herstellen. Durch das Pultrusionsverfahren, bei dem der Thermoplast vorübergehend wieder aufgeschmolzen wird, entsteht eine dichte, porenarme Polymermatrix.

Profilförmige Verbundwerkstoffe eignen sich zur Verstärkung von Bauteilen, die im Hochbau, Fahrzeugbau, Leichtbau oder Apparate- und Gerätebau gegeben sind, wobei die Bauteile insbesondere Decken oder Wände von Bauten sind. Das Profil wird zur Verstärkung mit einem Verbindungsmittel, d. h. mit einem Klebstoff, auf das Bauteil aufgebracht. Bei einem Faserverbundwerkstoff mit einer Thermoplastmatrix besteht das Problem, dass die üblichen Verbindungsmittel auf Thermoplasten schlecht haften. Bei einer Belastung des verstärkten Bauteils würde sich die Verbindung zwischen dem Profil und dem Verbindungsmittel lösen.

EP-0,579,047 zeigt einen Verbundwerkstoff nach dem Oberbegriff des Anspruches 1.

Aufgabe der Erfindung ist es, einen Verbundwerkstoff zu schaffen, bei dem Fasern in einer Thermoplastmatrix eingebettet sind und der mit einem gebräuchlichen Verbindungsmittel auf einem Bauteil so befestigbar ist, dass sich die erwartete Verstärkungsfunktion ergibt. Diese Aufgabe wird durch den im Anspruch 1 definierten Verbundwerkstoff gelöst.

Der Verbundwerkstoff mit in einer Thermoplastmatrix eingebetteten Fasern hat eine zu behandelnde freie Oberfläche. Er weist einen oder mehrere Kapillarräume auf, die sich zwischen den Fasern erstrecken, die zumindest teilweise durch kommunizierende Poren gebildet sind und die gegen die zu behandelnde Oberfläche offen sind. Ein mittlerer Durchmesser der Poren ist grösser, gleich oder nicht wesentlich kleiner als der Faserdurchmesser.

Die abhängigen Ansprüche 2 bis 5 betreffen vorteilhafte Ausführungsformen des erfindungsgemässen Verbundwerkstoffs, die Ansprüche 6 bis 8 beziehen sich auf entsprechende Herstellverfahren und Gegenstand des Anspruchs 9 sowie des Anspruchs 10 sind Verwendungen des erfindungsgemässen Verbundwerkstoffs.

Nachfolgend wird die Erfindung anhand der Zeichnungen erläutert. Es zeigen:
- Fig. 1: eine Illustration zu einer Druckimprägnierung,
- Fig. 2: ausschnittsweise eine Probe von einem mit Thermoplastpartikeln imprägnierten Faserband, in dem Faserstücke eine Haufwerk-Anordnung bilden,
- Fig. 3: die Probe der Fig. 2 nach einem Aufschmelzen des Thermoplasts,
- Fig. 4: eine Probe mit unidirektional angeordneten Fasern, mit in den Faserverbund eingelagerten Partikeln, und
- Fig. 5: einen Querschnitt durch ein pultrudiertes Profil, das einen erfindungsgemässen Verbundwerkstoff enthält und das auf einem Substrat befestigt ist.

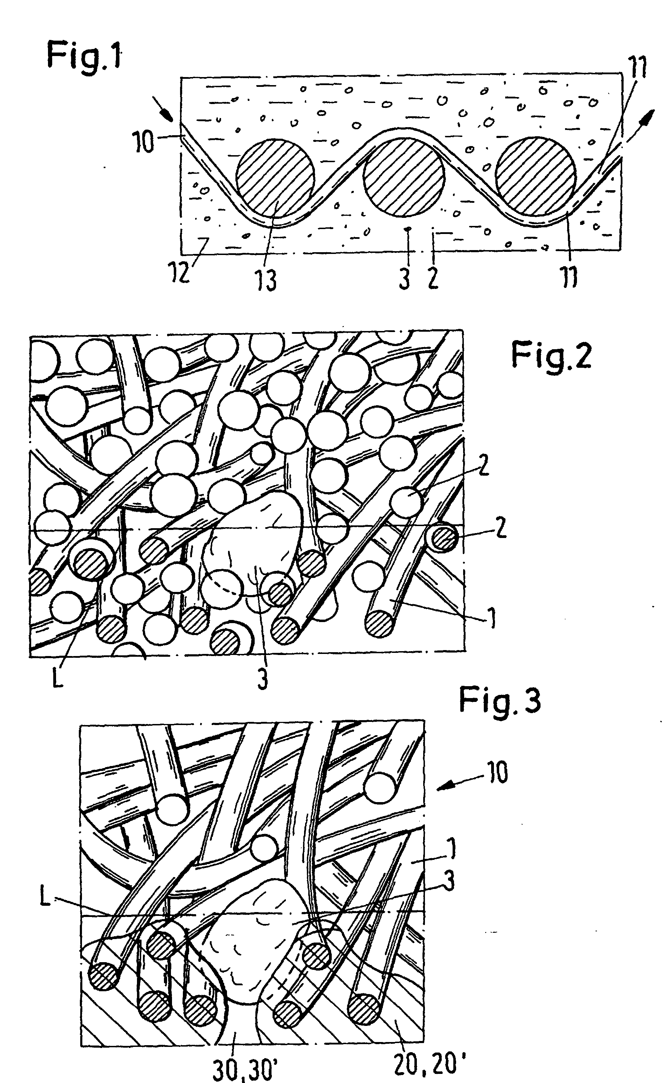

Bei einer Druckimprägnierung, wie sie anhand des Ausschnitts in Fig. 1 illustriert ist, wird ein Faserstrang 10 mit einer vorgegebenen Abzugsgeschwindigkeit durch eine Dispersion 12 eines Imprägnierbads durchgezogen und unter Einwirkung eines Werkzeugs mit Partikeln 2 und 3 imprägniert. Das Werkzeug umfasst eine Mehrzahl von Umlenkelementen 13, an denen jeweils im Bereich eines Umschlingungswinkels eine Druckimprägnierung stattfindet. Der Faserstrang 10 mit zwei breiten Oberflächen 11 besteht aus mehreren übereinanderliegende Lagen von Fasern 1. An den Umlenkelementen erfahren die Fasern, die auf der Umlenkfläche aufliegen, in Strangrichtung eine geringere Spannung als weiter aussen liegende. Die aussen liegenden, strafferen Fasern werden zwischen die innen liegenden hineingezogen, wodurch sich eine Spreizung des Bandes quer zur Strangrichtung ergibt. Partikel 2 und 3, die an der Oberfläche 11 des Strangs 10 zwischen dieser und der Umlenkfläche eingeschlossen sind, werden zwischen die weniger straffen Fasem 1 gepresst, wodurch eine zusätzliche Spreizung des Bandes 10 bewirkt wird. Nach dieser Aufnahmephase am Umlenkelement 13 gelangt der Strang 10 wieder in die freie Dispersion 12, wo seine Oberflächen 11 unter der Wirkung von Diffusion und Adsorptionskräften wieder mit Partikeln 2, 3 beladen wird. Am nachfolgenden Umlenkelement erfolgt ein Einpressen von Partikeln 2, 3 auf der andern Seite 11 des Strangs 10.

Eine erste Möglichkeit, einen porösen, erfindungsgemässen Verbundwerkstoff herzustellen, besteht darin, dass zur Imprägnierung ein Polymerpulver verwendet wird, das aufgeschmolzen die Fasern nur teilweise benetzt. Dies kann gelingen, wenn die Temperatur nur wenig über die Schmelztemperatur erhöht wird. Grosse Poren können erhalten werden, wenn ein Polymerpulver mit grossen Partikeln (z. B. mit Durchmessern grösser als 20 µm) verwendet wird. Bei der Konsolidierung muss darauf geachtet werden, dass die Poren nicht durch zu hohe Drücke oder aufgrund zu langer Einwirkzeiten wieder verschlossen werden.

Weitere Möglichkeiten werden anhand der Figuren 2 bis 4 erläutert. Die in Fig. 2 gezeigte Probe ist unter der horizontalen Linie L als Querschnitt, oberhalb als Draufsicht dargestellt. Die Fasern 1 haben beschränkte Längen und bilden ein Haufwerk oder eine filzartige Anordnung. Eine im Imprägnierbad durchgeführte Partikelbeladung des Faserhaufwerks führt zu einer Expansion des Haufwerks. Fig. 2 zeigt die Probe nach dem Imprägnierbad. Die zwischen den Fasern 1 eingelagerten Partikel sind Thermoplastpartikel 2 und zusätzliche Partikel 3, die als Fremdkörper den Thermoplastpartikeln 2 zugemischt worden sind. Das Partikel 3 ist gemäss der Darstellung in Fig. 2 wesentlich grösser als die Partikel 2. Der Durchmesser des Partikels 3 beträgt beispielsweise 10 bis 15 µm, jener der Thermoplastpartikel 3 bis 8 µm. Es ist aber auch möglich, dass alle Partikel 2 und 3 weitgehend gleich gross sind. Mit der Wahl der Partikeldurchmesser können die Abmessungen der zu erzeugenden Poren beeinflusst werden.

Die Probe der Fig. 2 wird nach einem Trocknungsschritt einer Erwärmung zugeführt, bei der die Thermoplastpartikel 2 aufgeschmolzen werden, während die zusätzlichen Partikel 3 unverändert bleiben. Der geschmolzene Thermoplast benetzt die Fasern 2 und bewirkt aufgrund der Oberflächenspannung eine Kontraktion des im Imprägnierbad expandierten Haufwerks. Das kontrahierte Haufwerk ist in Fig. 3 abgebildet, in der Draufsicht ohne eine Darstellung der Schmelze und im Querschnitt unterhalb der Linie L mit einer Darstellung der Schmelze 20'. Das zusätzliche Partikel 3 wird bei der Erwärmung nicht verflüssigt und behindert daher lokal die Kontraktion des Haufwerks. In seiner Umgebung bleiben deshalb Poren 30' zwischen den geschmolzenen Polymerphasen 20' offen. Eine Konsolidierung führt zu einem faserverstärkten Thermoplastband 10 mit einer Polymermatrix 20, in der durch die Poren 30' teilweise kommunizierende Kapillarräume 30 gebildet werden.

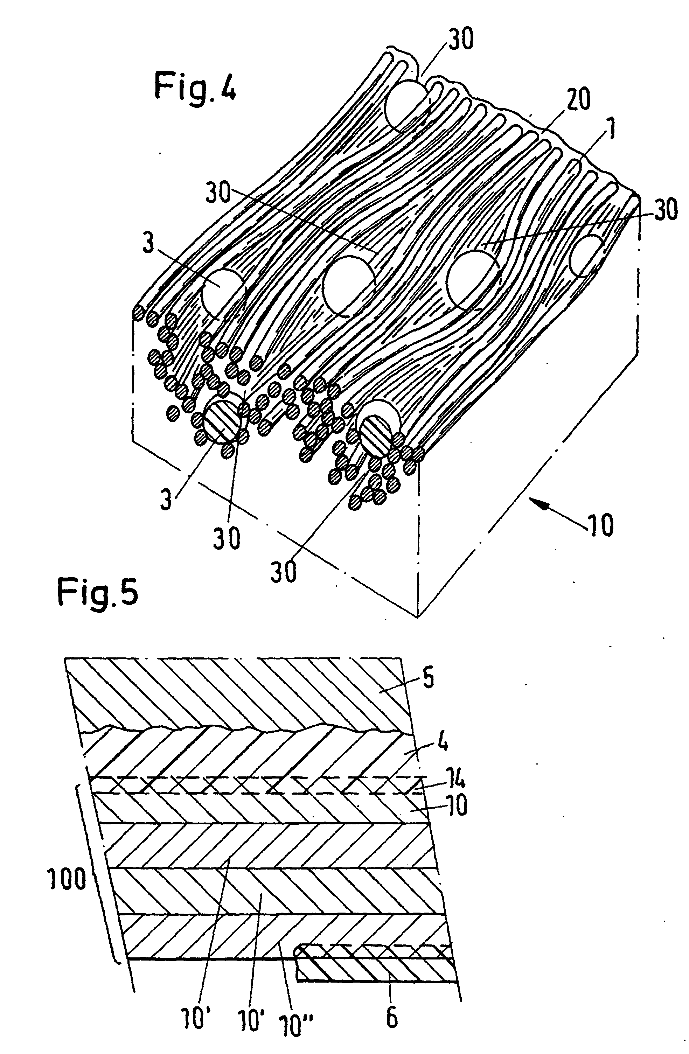

Fig. 4 zeigt eine Probe eines faserverstärkten Thermoplastbands 10 mit Fasern 1, die ein unidirektionales Bündel bilden und zwischen denen zusätzliche Partikel 3 eingebettet sind. Eine Thermoplastmatrix 20, die mittels einer Druckimprägnierung erzeugt worden ist, ist lediglich mit einer Konturlinie angedeutet. Kapillarräume 30 haben sich wie bei der Probe der Fig. 3 unter Einwirkung der zusätzlichen Partikel 3 ergeben, die als Fremdkörper in der Thermoplastmatrix 20 zwischen den Fasern eingelagert sind.

Die zusätzlichen Partikel 3 können aus organischen Stoffen, insbesondere Kunststoffen bestehen, deren Schmelzpunkte mindestens 10 K höher als der Schmelzpunkt der Thermoplastmatrix sind. Sie können auch aus einem anorganischen Material, beispielsweise Glas oder Keramik, bestehen. Beim Aufschmelzen von Thermoplastpartikeln 2 (vgl. Fig. 2) kontrahiert der im Imprägnierbad expandierte Faserstrang, wobei dank lokaler Behinderungen der Kontraktion Poren eines Kapillarraums 30 entstehen, die sich jeweils in der Umgebung eines Partikels 3 ausbilden.

In der Regel ist der erfindungsgemässe Verbundwerkstoff aus mehreren faserverstärkten Thermoplastbändern zusammengesetzt. Beispielsweise werden die einzelnen Bänder mittels einer Pultrusion zusammengeschweisst und gleichzeitig zu einem Profil geformt. Bei einem Verbundwerkstoff, der mehrere übereinander angeordnete Lagen der Thermoplastbänder aufweist, werden vorzugsweise nur für die zu behandelnde Oberfläche poröse Bänder mit Kapillarräumen (oder lediglich ein Band) verwendet. Fig. 5 zeigt ein Beispiel eines solchen mehrlagigen Verbundwerkstoffs 100 mit Lagen 10, 10' (zweimal) und 10". Die Lage 10 ist porös und kann mit einem Verbindungsmittel 4 auf ein Substrat 5 (Wandstück) aufgebracht werden. Das Verbindungsmittel 4 ist in einem fliessfähigen Zustand in einer Randzone 14 in die Kapillarräume der Lage 10 eingedrungen. Das Verbindungsmittel 4 ist so gewählt, dass es nach einer Verfestigung eine widerstandsfähige Verbindung zwischen dem Verbundwerkstoff 100 und dem Substrat 5 bildet.

Die untere Lage 10" des Verbundwerkstoffs 100 kann ebenfalls porös sein, so dass eine Beschichtung 6 aufgetragen werden kann, die auch dank einer Verankerung in Kapillarräumen mit der Lage 10" verbindbar ist. Anstelle einer relativ dicken Schicht 6 kann auch ein Farbauftrag vorgesehen sein.

Die einzelnen Lagen 10, 10', 10" des Verbundwerkstoffs 100 können auch verschiedene Zusammensetzungen aufweisen. So können beispielsweise die inneren Lagen 10' Glasfasern enthalten, während die Fasern der Randlagen 10' und/oder 10" aus Kohlenstoff, Aramid oder PBO gebildet sein können. Auch die Zusammensetzung der Polymermatrix kann variabel sein. Die Thermoplastpartikel 2 können auch teilweise durch Duroplastpartikel und/oder anorganische Partikel substituiert sein. Dies kann vorteilhaft sein, da die Verbindungsmittel (Klebstoffe) auf Duroplasten oder anorganischen Stoffen besser haften.

Bei den oben beschriebenen Beispielen sind die zusätzlichen Partikel 3 integrierende Bestandteile des Verbundwerkstoffs 10. Für das Material der zusätzlichen Partikel 3 können lösliche Stoffen verwendet werden, so dass diese Partikel 3 nach der Konsolidierung der Thermoplastmatrix aus der Matrix herausgelöst werden können. Als Stoffe kommen Salze, lösliche Polymere, Oligomere, Wachse oder Fette in Frage. Als Lösungsmittel sind organische Flüssigkeiten möglich; aber vorzugsweise sollte Wasser verwendet werden. Sind als zusätzliche Partikel 3 Salzkristalle vorgesehen, so wählt man beim Druckimprägnieren für die flüssige Phase der Dispersion (vorzugsweise Wasser) mit Vorteil eine gesättigte Lösung des Salzes.

Als porenbildende Fremdstoffe kommen auch solche in Frage, die durch einen chemischen Abbau entfernbar sind, oder solche (beispielsweise Öle), die als flüssige Phase und in emulgierter Form im Imprägnierbad zwischen die Fasern eingebracht werden. Flüssige Fremdstoffe hindern die Thermoplastschmelze, die Fasern vollständig zu benetzen. Die flüssigen Fremdstoffe können nach der Konsolidierung mittels Lösungsmittel und/oder Verdampfung entfernt werden.

Eine weitere Möglichkeit, einen erfindungsgemässen Verbundwerkstoff herzustellen, besteht darin, für zusätzliche Partikel oder auch für alle Partikel vorzusehen, sie mit einem Treibmittel zu imprägnieren. Bei einer Erwärmungsphase werden die Partikel unter Freisetzung des Treibmittels aufgeschmolzen, wobei das Treibmittel in die Gasphase übergeht und dabei Blasen bildet. Aus der so erzeugten, schaumartigen Schmelze bildet sich bei der Konsolidierung eine poröse Thermoplastmatrix aus.

Eine Möglichkeit, an einem pultrudierten, aus einem Verbundwerkstoff bestehenden Profil eine poröse Oberfläche herzustellen, besteht darin, Poren durch Entfernen von Material zu erzeugen. Das Material kann mechanisch oder mit Laserverfahren entfernt werden. Bei diesem Vorgehen werden die Verstärkungsfasem beschädigt. Folglich wird die Festigkeit des Profils verringert. Beim erfindungsgemässen Verfahren zur Herstellung poröser Profile bleiben die Fasern intakt, so dass die durch die Fasern gegebene Festigkeit nicht beeinträchtigt ist.

## Patentansprüche

1. Verbundwerkstoff (10, 100) mit in einer Thermoplastmatrix (20) eingebetteten Fasern (1), der eine zu behandelnde freie Oberfläche (11) aufweist, mit einem oder mehreren Kapillarräumen (30), die sich zwischen den Fasern erstrecken, die zumindest teilweise durch kommunizierende Poren gebildet sind und die gegen die zu behandelnde Oberfläche (11) offen sind, **dadurch gekennzeichnet, daß** ein mittlerer Durchmesser der Poren grösser, gleich oder nicht wesentlich kleiner als ein mittlerer Durchmesser der Fasern ist.

2. Verbundwerkstoff nach Anspruch 1, **dadurch gekennzeichnet, dass** die Fasern (1) ein unidirektionales Bündel bilden oder dass die Fasern in Form von Faserstücken vorliegen, die ein Haufwerk oder eine filzartige Anordnung bilden, und dass die Thermoplastmatrix (20) mittels einer Druckimprägnierung hergestellt ist.

3. Verbundwerkstoff nach Anspruch 1 oder 2, **dadurch gekennzeichnet, dass** die Kapillarräume (30) sich unter Einwirkung von zusätzlichen Partikeln (3) ergeben haben, die als Fremdkörper in der Thermoplastmatrix (20) zwischen den Fasern (1) eingelagert sind, wobei der Anteil der zusätzlichen Partikel (3) - bezogen auf das gesamte Volumen der Thermoplastmatrix und der zusätzlichen Partikel - rund 5 bis 30 Vol-% beträgt.

4. Verbundwerkstoff nach Anspruch 3, **dadurch gekennzeichnet, dass** die zusätzlichen Partikel (3) aus organischen Stoffen, insbesondere Kunststoffen, bestehen, deren Schmelzpunkte mindestens 10 K über dem Schmelzpunkt der Thermoplastmatrix liegen, oder dass sie aus anorganischen Stoffen wie beispielsweise Glas oder Keramik bestehen.

5. Verbundwerkstoff (100) nach einem der Ansprüche 1 bis 4, **dadurch gekennzeichnet, dass** er aus mehreren faserverstärkten Thermoplastbändern (10, 10', 10") zusammengesetzt ist, die verschweisst - beispielsweise mittels einer Pultrusion - übereinander angeordnet sind, wobei vorzugsweise nur die zu behandelnde Oberfläche (11) ein Band (10) oder mehrere Bänder mit Kapillarräumen (30) enthalten.

6. Verfahren zur Herstellung eines faserverstärkten Thermoplastbands (10), das ein Verbundwerkstoff gemäss einem der Ansprüche 1 bis 4 ist, **dadurch gekennzeichnet, dass** ein Faserstrang oder ein Band bestehend aus filzartig angeordneten Faserstücken (1) mit einer Thermoplastpartikel (2) enthaltenden Dispersion (12) druckimprägniert wird, wobei die Dispersion zusätzliche Partikel (3) aus organischem oder anorganischem Material enthält, die einen höheren Schmelzpunkt als die Thermoplastpartikel haben, dass nach einer Trocknungsphase die Thermoplastpartikel aufgeschmolzen werden und dass die dabei gebildete Schmelze zu einer porösen Thermoplastmatrix (20, 30) konsolidiert wird.

7. Verfahren nach Anspruch 6, **dadurch gekennzeichnet, dass** die zusätzlichen Partikel (3) zumindest teilweise aus löslichen Stoffen bestehen und dass nach der Konsolidierung der Thermoplastmatrix (20) diese Partikel durch Auflösen aus der Matrix entfernt werden, wobei insbesondere die flüssige Phase der Dispersion aus einer gesättigten Lösung eines Salzes besteht und die zusätzlichen Partikel (3) zumindest teilweise aus Kristallen des Salzes bestehen.

8. Verfahren zur Herstellung eines faserverstärkten Thermoplastbands (10), das ein Verbundwerkstoff gemäss einem der Ansprüche 1 bis 4 ist, **dadurch gekennzeichnet, dass** ein Faserstrang oder ein Band bestehend aus filzartig angeordneten Faserstücken mit einer Thermoplastpartikel (2) enthaltenden Dispersion druckimprägniert wird, wobei Partikel (2, 3) dispergiert sind, in denen ein Treibmittel enthalten ist, und dass bei einer Erwämungsphase die Partikel unter Freisetzung des Treibmittels, das in die Gasphase übergeht und dabei Blasen bildet, aufgeschmolzen werden und dass die so erzeugte Schmelze zu einer porösen Thermoplastmatrix (20, 30) konsolidiert wird.

9. Verwendung des Verbundwerkstoffes (10, 100) gemäss einem der Ansprüche 1 bis 5, **dadurch gekennzeichnet, dass** ein zu verstärkendes Wandstück (5) mit mindestens einem Profil aus dem Verbundwerkstoff verstärkt wird, wobei mit einer Verbindungsmasse, insbesondere einem Klebstoff, die bei der Verarbeitung fliessfähig ist und dabei in die Kapillarräume (30) des Verbundwerkstoffes eindringen kann, eine sich verfestigende Verbindungsschicht zwischen dem Profil (10, 100) und dem Wandstück (5) herstellbar ist.

10. Verwendung des Verbundwerkstoffes (10, 100) gemäss einem der Ansprüche 1 bis 5 als porösen Träger für eine Beschichtung (6) oder einen Farbauftrag, wobei das Material der Beschichtung oder des Farbauftrags auf die zu behandelnde Oberfläche (11) - bei einem zumindest teilweisen Eindringen in den Kapillarraum (30) - aufgebracht wird.

## Claims

1. Composite material (10, 100) comprising fibers (1) which are embedded in a thermoplastic matrix (20), which has a free surface (11) to be treated, with one or more capillary spaces (30) which extend between the fibers, which are at least partly formed by communicating pores and which are open towards the surface (11) to be treated, **characterized in that** an average diameter of the pores is greater than, equal to or not substantially less than an average diameter of the fibers.

2. Composite material in accordance with claim 1, **characterized in that** the fibers (1) form a unidirectional bundle; or **in that** the fibers are present in the form of fiber pieces which form a pile or a felt-like arrangement; and **in that** the thermoplastic matrix (20) is produced by means of a pressure impregnation.

3. Composite material in accordance with claim 1 or claim 2, **characterized in that** the capillary spaces (30) have resulted under the influence of additional particles (3) which are deposited as foreign bodies in the thermoplastic matrix (20) between the fibers (1), with the proportion of the additional particles (3) - in relation to the total volume of the thermoplastic matrix and of the additional particles - amounting to about 5 to 30 % by volume.

4. Composite material in accordance with claim 3, **characterized in that** the additional particles (3) consist of organic substances, in particular of plastics, the melting points of which lie at least 10 K above the melting point of the thermoplastic matrix; or **in that** they consist of inorganic substances such as for example glass or ceramics.

5. Composite material (100) in accordance with any one of the claims 1 to 4, **characterized in that** it is composed of a plurality of fiber reinforced thermoplastic bands (10,10', 10") which are arranged one above the other one above the other when welded - for example by means of a pultrusion -, with preferably only the surface (11) to be treated containing one band (10) or a plurality of bands with capillary spaces (30).

6. Method for the manufacture of a fiber reinforced thermoplastic band (10) which is a composite material in accordance with any one of the claims 1 to 4, **characterized in that** a fiber strand or a band consisting of fiber pieces (1) which are arranged in a felt-like manner is pressure impregnated with a dispersion (12) containing thermoplastic particles (2), with the dispersion containing additional particles (3) of an organic or an inorganic material which have a higher melting point than the thermoplastic particles; **in that** after a drying phase the thermoplastic particles are melted; and **in that** the melt which is thereby formed is consolidated to form a porous thermoplastic matrix (20, 30).

7. Method in accordance with claim 6, **characterized in that** the additional particles (3) consist at least partly of soluble substances; and **in that** after the consolidation of the thermoplastic matrix (20) these particles are removed from the matrix through dissolving, with in particular the liquid phase of the dispersion consisting of a saturated solution of a salt and the additional particles (3) consisting at least partly of crystals of the salt.

8. Method for the manufacture of a fiber reinforced thermoplastic band (10) which is a composite material in accordance with any one of the claims 1 to 4, **characterized in that** a fiber strand or a band consisting of fiber pieces which are arranged in a felt-like manner are pressure impregnated with a dispersion containing thermoplastic particles (2), with particles (2, 3) in which an expanding agent is contained being dispersed; and **in that** in a heating phase the particles are melted while liberating the expanding agent, which passes into the gas phase and forms bubbles in so doing; and **in that** the thus produced melt is consolidated to form a porous thermoplastic matrix (20, 30).

9. Use of the composite material (10, 100) in accordance with any one of the claims 1 to 5, **characterized in that** a wall piece (5) to be reinforced is reinforced with at least one section of the composite material, with it being possible to produce a solidifying connection layer between the section (10, 100) and the wall piece (5) with a bonding mass, in particular an adhesive, which is flowable during the processing and which can in this condition penetrate into the capillary spaces (30) of the composite material.

10. Use of the composite material (10, 100) in accordance with any one of the claims 1 to 5 as a porous carrier for a coating (6) or a coat of paint, with the material of the coating or of the coat of paint being applied to the surface (11) to be treated - with an at least partial penetration into the capillary space (30).

## Revendications

1. Matériau composite (10, 100) avec des fibres (1) incluses dans une matrice thermoplastique (20), qui présente une surface libre (11) à traiter, avec un ou plusieurs espaces capillaires (30) qui s'étendent entre les fibres, qui sont formés au moins partiellement par des alvéoles communiquants et qui sont ouverts vers la surface à traiter (11), **caractérisé en ce qu'**un diamètre moyen des alvéoles est plus grand, égal ou ne pas sensiblement plus petit qu'un diamètre moyen des fibres.

2. Matériau composite selon la revendication 1, **caractérisé en ce que** les fibres (1) forment un paquet unidirectionnel ou bien que les fibres se présentent sous forme de tronçons de fibres qui forment un tas ou un agencement feutré, et **en ce que** la matrice thermoplastique (20) est réalisée au moyen d'une imprégnation de pression.

3. Matériau composite selon la revendication 1 ou 2, **caractérisé en ce que** les espaces capillaires (3) se forment sous l'effet de particules additionnelles (3) qui sont déposées en tant que corps étrangers dans la matrice thermoplastique (20) entre les fibres (1), où la part des particules additionnelles (3) - par rapport au volume total de la matrice thermoplastique et des particules additionnelles - représente environ 5 à 30 % en volume.

4. Matériau composite selon la revendication 3, **caractérisé en ce que** les particules additionnelles (3) sont constituées de matières organiques, notamment de matières synthétiques dont les points de fusion se situent au moins 10 K au-dessus du point de fusion de la matrice thermoplastique, où qu'elles sont constituées de matières inorganiques, comme par exemple de verre ou de céramique.

5. Matériau composite (100) selon l'une des revendications 1 à 4, **caractérisé en ce qu'**il est composé de plusieurs bandes thermoplastiques (10, 10', 10") renforcées par des fibres qui sont disposées les unes au-dessus des autres en étant soudées, par exemple au moyen d'une pultrusion, où de préférence seulement la surface à traiter (11) comporte une bande (10) ou plusieurs bandes à espaces capillaires (30).

6. Procédé de fabrication d'une bande thermoplastique (10) renforcée par des fibres, qui est un matériau composite selon l'une des revendications 1 à 4, **caractérisé en ce qu'**un paquet de fibres ou une bande constituée de tronçons de fibres (1) disposés à la manière d'un feutre est imprégné par pression avec une dispersion (12) contenant des particules thermoplastiques (2), où la dispersion contient des particules additionnelles (3) en matériau organique ou inorganique qui ont un point de fusion plus élevé que les particules thermoplastiques, **en ce qu'**après une phase de séchage, les particules thermoplastiques sont amenées à fondre et **en ce que** la fusion ainsi produite est consolidée en une matrice thermoplastique poreuse (20, 30).

7. Procédé selon la revendication 6, **caractérisé en ce que** les particules additionnelles (3) sont constituées au moins partiellement de matières solubles, et **en ce qu'**après la consolidation de la matrice thermoplastique (20), ces particules sont retirées par dissolution de la matrice, où notamment la phase liquide de la dispersion est constituée d'une solution saturée d'un sel, et **en ce que** les particules additionnelles (3) sont constituées au moins partiellement de cristaux du sel.

8. Procédé de fabrication d'une bande thermoplastique (10) renforcée par des fibres qui est un matériau composite selon l'une des revendications 1 à 4, **caractérisé en ce qu'**un paquet de fibres ou une bande constitué de tronçons de fibres disposés à la manière d'un feutre est imprégné par pression d'une dispersion contenant des particules thermoplastiques (2), où des particules (2, 3) sont dispersées dans lesquelles un agent propulseur est contenu, et **en ce que** lors d'une phase d'échauffement, les particules, en libérant l'agent propulseur, qui passe en phase gazeuse et, ce faisant, forme des bulles, sont amenées à fondre et **en ce que** la fusion ainsi produite est consolidée en une matrice thermoplastique poreuse (20, 30).

9. Utilisation du matériau composite (10, 100) selon l'une des revendications 1 à 5, **caractérisée en ce qu'**un tronçon de mur (5) à renforcer est renforcé avec au moins un profilé en matériau composite, où peut être réalisée avec une masse de liaison, notamment une colle, qui est apte à s'écouler lors du traitement et, ce faisant, peut pénétrer dans les espaces capillaires (30) du matériau composite, une couche de liaison qui se solidifie entre le profilé (10, 100) et le tronçon de mur (5).

10. Utilisation du matériau composite (10, 100) selon l'une des revendications 1 à 5 comme support poreux pour une enduction (6) ou une application de couleur, où le matériau de l'enduction ou de l'application de couleur est appliqué sur la surface à traiter (11), lors d'une pénétration au moins partielle dans l'espace capillaire (30).
